# EUROPEAN PATENT APPLICATION

(11) **EP 4 850 944 A1**
(43) Date of publication of application: **09.12.2026**
(21) Application number: 24936570.1
(22) Date of filing: 01.08.2024
(51) Int. Cl.: B60K 1/04, B60L 50/64, H01M 10/6552, H01M 10/613, H01M 10/615, H01M 10/625, H01M 50/147, H01M 50/244

(54) **VEHICLE BODY AND VEHICLE**

(30) Priority: 23.04.2024 CN 202420847711 U
(71) Applicant: Contemporary Amperex Technology Co., Limited, Ningde, Fujian 352100 (CN)
(72) Inventor: CHEN, Hang, Ningde, Fujian 352100 (CN); WANG, Qing, Ningde, Fujian 352100 (CN); WANG, Yong, Ningde, Fujian 352100 (CN)
(74) Representative: Straus, Alexander
(86) International application number: PCT/CN2024/109305
(87) International publication number: WO 2025/222677

(57) **Abstract**

A vehicle body (400) and a vehicle (1000). The vehicle body (400) comprises: a battery accommodating portion (41), an accommodating space (41a) being provided in the battery accommodating portion (41), and a first opening being provided in the accommodating space (41a); a battery cell (20), the battery cell (20) being provided in the accommodating space (41a); a vehicle body floor (42), the vehicle body floor (42) covering the battery accommodating portion (41) and closing the first opening, and the vehicle body floor (42) being provided with a recess (421); and a heat exchange member (43), the heat exchange member (43) being provided in the recess (421) and used for exchanging heat with the battery cell (20).

## Description

### CROSS-REFERENCE TO RELATED APPLICATIONS

This application is based on and claims priority to Chinese Patent Application No. 202420847711.1, filed on April 23, 2024, which is incorporated herein by reference in its entirety.

### TECHNICAL FIELD

This application relates to the technical field of vehicles, and in particular, to a vehicle body and a vehicle.

### BACKGROUND

In recent years, new energy vehicles have rapidly developed. In the field of electric vehicles, batteries, as a power source of electric vehicles, are of irreplaceable importance. An energy density of a battery affects a power capacity of the battery, and further affects electric endurance of a new energy vehicle. Therefore, how to increase an energy density of a battery in a vehicle has become one of the urgent problems to be solved for new energy vehicles.

### SUMMARY

Embodiments of this application provide a vehicle body and a vehicle, to effectively increase an energy density of a battery in the vehicle body and help increase electric endurance of the vehicle.

According to a first aspect, an embodiment of this application provides a vehicle body, including: a battery accommodating portion, where the battery accommodating portion is provided with an accommodating space, and the accommodating space is provided with a first opening; a battery cell, where the battery cell is provided in the accommodating space; a vehicle body floor, where the vehicle body floor covers the battery accommodating portion and closes the first opening, and the vehicle body floor is provided with a recess; and a heat exchange member, where the heat exchange member is provided in the recess and configured to exchange heat with the battery cell.

In the above technical solution, the vehicle body floor integrates a function of a cover plate for the battery accommodating portion, thereby reducing the number of parts, lowering manufacturing costs, and reducing a weight of the vehicle body. The recess for accommodating the heat exchange member is provided on the vehicle body floor, to reduce the space occupation of the heat exchange member in the accommodating space and help increase space occupation of the battery cell in the accommodating space. This increases an energy density of the battery in the vehicle body.

In some embodiments of this application, the recess is located on an outer side of the accommodating space.

In the above technical solution, providing the recess on the outer side of the accommodating space saves space inside the accommodating space, which helps further increase the space occupation of the battery cell in the accommodating space, thereby further increasing the energy density of the battery in the vehicle body. Moreover, in the above solution, the heat exchange member is separated from the battery cell, reducing the probability that the battery cell is affected by failure or damage of the heat exchange member, improving reliability of the battery cell inside the accommodating space. In addition, the recess is located on the outer side of the accommodating space, which facilitates disassembly of the heat exchange member and reduces maintenance costs of the heat exchange member.

In some embodiments of this application, a thickness dimension of the heat exchange member is less than or equal to a recess depth dimension of the recess.

In the above technical solution, since the recess is located on the outer side of the accommodating space, with the thickness dimension of the heat exchange member less than or equal to the recess depth dimension of the recess, the surface of the vehicle body floor is more likely to remain flat, facilitating the arrangement of other components on the vehicle body floor, facilitating the arrangement of a cockpit and passenger cabin of the vehicle. Moreover, in this solution, the mounting depth of the heat exchange member in the recess is relatively large, which reduces the probability that the heat exchange member detaches from the recess and improves mounting reliability of the heat exchange member on the vehicle body floor.

In some embodiments of this application, the vehicle body further includes a heat insulation member, where the heat insulation member covers the vehicle body floor, and an orthographic projection of the recess on the vehicle body floor is located within an orthographic projection of the heat insulation member on the vehicle body floor.

In the above technical solution, the heat insulation member reduces a heat loss of the heat exchange member, thereby facilitating more efficient heat exchange between the heat exchange member and the battery cell, improving the heat exchange efficiency between the heat exchange member and the battery cell, reducing the probability of thermal runaway of the battery cell, and improving the reliability of the battery cell.

In some embodiments of this application, the vehicle body floor is provided with a protruding portion protruding toward an inner side of the accommodating space, and the recess is formed on a surface of the protruding portion located on the outer side of the accommodating space.

In the above technical solution, the protruding portion is provided on the vehicle body floor, and the recess is provided on the protruding portion. In this case, the protruding portion provides a relatively large space for arrangement of the recess, which enables the recess to have an appropriate recess depth for mounting of the heat exchange member and improves the mounting reliability of the heat exchange member on the vehicle body floor. Moreover, while the mounting reliability of the heat exchange member on the vehicle body floor is improved, this helps reduce the thickness dimension of the vehicle body floor, reducing material consumption of the vehicle body floor, lowering costs, and helping reduce the weight of the vehicle body.

In some embodiments of this application, the vehicle body floor is stamped to form the protruding portion.

In the above technical solution, the protruding portion may be understood as a concave rib formed by stamping the vehicle body floor downward, and a concave region of the concave rib forms the recess. In this way, the protruding portion not only provides an arrangement position of the recess, but also improves a strength and stiffness of the vehicle body floor, providing stronger protection above the battery cell, and reducing a probability that the battery cell is damaged due to a collision from above.

In some embodiments of this application, the battery cell includes a housing, where the housing is provided with a plurality of housing walls, one of the plurality of housing walls is a first housing wall, the first housing wall abuts against the protruding portion, and a filling member is provided between the first housing wall and the vehicle body floor.

In the above technical solution, the housing abuts against the protruding portion through the first housing wall. In this case, the housing is relatively close to the heat exchange member, and the heat exchange member quickly exchanges heat with the battery cell through the first housing wall, helping improve the heat exchange efficiency of the battery cell. The filling member provides support between the first housing wall and the vehicle body floor, better supporting the vehicle body floor. This helps reduce the probability of deformation or damage of the vehicle body floor, reduce a probability of displacement of the battery cell in the accommodating space, and improve the stability of the battery cell in the accommodating space, thereby helping improve the operation reliability of the battery cell.

In some embodiments of this application, the filling member includes at least one of a thermally conductive portion and a bonding portion.

In the above technical solution, since the filling member includes at least one of the thermally conductive portion and the bonding portion, the filling member not only provides support between the first housing wall and the vehicle body floor, but also further implements a function of thermal conduction and/or bonding. When the filling member includes the thermally conductive portion, efficiency of heat exchange between the heat exchange member and the battery cell is further improved. When the filling member includes the bonding portion, the stability of the battery cell in the accommodating space is improved, and a mounting region for the battery cell and the battery accommodating portion has higher strength and stiffness, which improves the reliability of the vehicle body.

In some embodiments of this application, the housing is provided with a pressure relief portion, and the pressure relief portion is provided on a housing wall other than the first housing wall.

In the above technical solution, the pressure relief portion is provided on the housing wall other than the first housing wall, preventing gas discharge of the pressure relief portion towards the vehicle body floor and the heat exchange member, reducing the impact on the vehicle body floor caused when the pressure relief portion discharges gas and relieves pressure during thermal runaway of the battery cell, thereby reducing the probability that the cockpit and passenger cabin of the vehicle are affected by high temperature during thermal runaway, helping improve safety of a driver and passenger. Moreover, in this solution, the impact of the gas discharge and pressure relief of the pressure relief portion on the heat exchange member is reduced, reducing the probability of damage to the heat exchange member caused by damage from thermal runaway of the battery cell, helping prolong a service life of the heat exchange member.

In some embodiments of this application, the pressure relief portion is provided on the housing wall located at a bottom of the housing.

In the above technical solution, the pressure relief portion is positioned at a greater distance from the vehicle body floor and the heat exchange member, thereby further reducing the impact on the vehicle body floor and the heat exchange member when the pressure relief portion discharges gas and relieves pressure, thus further improving the safety of the driver and passenger, further reducing the probability of damage to the heat exchange member when thermal runaway occurs in the battery cell.

In some embodiments of this application, the heat exchange member and the recess are connected to each other through bonding. In the above technical solution, the heat exchange member and the recess are connected to each other through bonding. In this way, the probability that the heat exchange member detaches from the recess is reduced, and mounting of the heat exchange member in the recess is strengthened, thereby improving reliability of heat exchange between the heat exchange member and the battery cell, and helping improve the operation reliability of the battery cell.

In some embodiments of this application, the heat exchange member is a heat exchange tube, and the heat exchange tube is configured as a flat tube.

In the above technical solution, the heat exchange member is configured as a heat exchange tube, and therefore the heat exchange tube has a simple structure, which lowers costs. The heat exchange tube is configured as a flat tube, and in this case, the flat tube has a relatively small thickness dimension and a relatively large flow capacity, achieving a better heat exchange effect; in addition, it has a relatively small dimension in a thickness direction of the vehicle body floor, which achieves a more compact overall structure of the vehicle body floor and the heat exchange member, saving space.

In some embodiments of this application, the heat exchange member includes a first heat exchange section and a second heat exchange section, the second heat exchange section is bent to form a U-shaped region, and the first heat exchange section is bent and provided in the U-shaped region and is bent and connected to the second heat exchange section; and the recess includes a first recess and a second recess, the second recess and the second heat exchange section are in a same shape, the second heat exchange section is provided in the second recess, the first recess and the first heat exchange section are in a same shape, and the first heat exchange section is provided in the first recess.

In the above technical solution, when the heat exchange member exchanges heat with a cell group formed by a plurality of battery cells, the U-shaped region formed by the peripheral second heat exchange section is opposite the peripheral battery cells of the cell group, and the first heat exchange section in the U-shaped region is opposite the internal battery cells. In this way, the heat exchange member compensates for a temperature difference between inner and outer cells caused by heat exchange between the peripheral battery cells and an environment, so that the heat exchange effect of the peripheral battery cells of the cell group and the internal battery cells of the cell group is substantially consistent, improving temperature uniformity of the cell group, thereby prolonging a service life of the cell group to a certain extent.

In some embodiments of this application, the accommodating space is provided with a second opening, and the second opening is located at a bottom of the accommodating space relative to the first opening, the vehicle body further includes a lower cover plate, and the lower cover plate covers the battery accommodating portion and closes the second opening.

In the above technical solution, since the first opening is provided at the top of the accommodating space, with the second opening further provided at the bottom of the accommodating space, it is more convenient to mount the battery cell into the battery accommodating portion. Moreover, since the vehicle body floor is mounted at the top of the battery accommodating portion, after the assembly of the entire vehicle, disassembly of the vehicle body floor is relatively difficult. Therefore, during subsequent maintenance, the battery cell may be repaired or replaced by detaching the lower cover plate, which further reduces maintenance costs.

According to a second aspect, an embodiment of this application further provides a vehicle, including the vehicle body described above.

In the above technical solution, since the battery cell in the vehicle body is provided in the accommodating space of the battery accommodating portion, the vehicle body has a relatively high battery energy density, thereby improving electric endurance of the vehicle. Moreover, the vehicle body has a relatively small number of parts and small weight, which helps lower manufacturing costs of the vehicle and further improves the electric endurance of the entire vehicle.

### BRIEF DESCRIPTION OF DRAWINGS

To describe the technical solutions in the embodiments of this application more clearly, the following briefly introduces the accompanying drawings required for describing the embodiments. It should be understood that the following drawings show only some embodiments of this application, and therefore should not be considered as limitations to the scope. For those of ordinary skill in the art, other relevant drawings may also be obtained based on these drawings without creative efforts.
FIG. 1 is a schematic structural diagram of a vehicle provided in some embodiments of this application;
FIG. 2 is a first schematic partial structural diagram of a vehicle body provided in some embodiments of this application;
FIG. 3 is an exploded view of a partial structure of a vehicle body provided in some embodiments of this application;
FIG. 4 is a second schematic partial structural diagram of a vehicle body provided in some embodiments of this application;
FIG. 5 is a third schematic partial structural diagram of a vehicle body provided in some embodiments of this application; and
FIG. 6 is a schematic structural diagram of a heat exchange member provided in some embodiments of this application.

Reference signs: 1000. vehicle; 20. battery cell; 21. housing; 211. first housing wall; 212. pressure relief portion; 200. controller; 300. motor; 400. vehicle body; 41. battery accommodating portion; 41a. accommodating space; 42. vehicle body floor; 421. recess; 422. protruding portion; 423. transition fillet; 43. heat exchange member; 431. first heat exchange section; 4311. fourth portion; 4312. fifth portion; 4320. U-shaped region; 432. second heat exchange section; 4321. first portion; 4322. second portion; 4323. third portion; 44. heat insulation member; 45. filling member; 46. lower cover plate; 47. laying member; X. first direction; Y. second direction; and Z. third direction.

### DESCRIPTION OF EMBODIMENTS

To make the objectives, technical solutions, and advantages of the embodiments of this application clearer, the technical solutions in the embodiments of this application will be clearly described below with reference to the accompanying drawings in the embodiments of this application. It is clear that the described embodiments are some but not all of the embodiments of this application. All other embodiments obtained by those of ordinary skill in the art based on the embodiments of this application without creative efforts shall fall within the protection scope of this application.

Unless otherwise defined, all technical and scientific terms used in this application have the same meanings as commonly understood by those skilled in the art of this application. The terms used in the specification of this application are only for the purpose of describing specific embodiments, and are not intended to limit this application. The terms "include" and "have" and any variations thereof in the specification and claims of this application and the above description of the drawings are intended to cover non-exclusive inclusion. The terms "first", "second", and the like in the specification and claims of this application or in the above drawings are used to distinguish different objects, rather than to describe a specific order or priority relationship.

Reference to "an embodiment" in this application means that a particular feature, structure, or characteristic described with reference to the embodiment may be included in at least one embodiment of this application. This phrase in various places in the specification does not necessarily refer to a same embodiment, nor is it an independent or alternative embodiment mutually exclusive with other embodiments.

In the description of this application, it should be noted that, unless otherwise clearly specified and limited, the terms "mount", "connect", "join", and "attach" should be understood in a broad sense. For example, it may be a fixed connection, a detachable connection, or an integral connection; it may be a direct connection or an indirect connection through an intermediate medium; or it may be internal communication between two elements. For those of ordinary skill in the art, the specific meanings of the above terms in this application may be understood based on specific circumstances.

The term "and/or" in this application is only an association relationship describing associated objects, representing that three relationships may exist. For example, A and/or B may represent three situations: A exists alone, both A and B exist, and B exists alone. In addition, the character "/" in this application generally indicates that the associated objects before and after are in an "or" relationship.

In the embodiments of this application, a same reference sign denotes a same component, and for brevity, detailed descriptions of the same component are omitted in different embodiments. It should be understood that the dimensions such as thickness, length, and width of various components in the embodiments of this application shown in the drawings, as well as the overall thickness, length, and width of the integrated apparatus, are only exemplary descriptions, and should not constitute any limitation to this application.

"A plurality of" in this application means two or more (including two).

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of this application. The battery cell may be cylindrical, flat, cuboid, or in other shapes, which is also not limited in the embodiments of this application. Battery cells are generally classified into three types based on packaging methods: cylindrical battery cell, prismatic battery cell, and pouch battery cell, which is also not limited in the embodiments of this application.

The battery in the embodiments of this application refers to a single physical module including one or more battery cells to provide a higher voltage and capacity. For example, the battery in this application may include a battery module or a battery pack. A battery generally includes a box for packaging one or more battery cells or a plurality of battery modules. The box prevents liquid or other foreign matters from affecting the charge or discharge of the battery cells.

The battery cell includes a housing, an electrode assembly, and an electrolyte. The housing is configured to accommodate the electrode assembly and the electrolyte. The electrode assembly is formed by a positive electrode sheet, a negative electrode sheet, and a separator. Operation of the battery cell mainly relies on metal-ion movement between the positive electrode sheet and the negative electrode sheet. The positive electrode sheet includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. A lithium-ion battery is used as an example. A material of the positive electrode current collector may be aluminum, and the positive electrode active material may be lithium cobalt oxide, lithium iron phosphate, ternary lithium, lithium manganese oxide, or the like. The negative electrode sheet includes a negative electrode current collector and a negative electrode active material layer. The negative electrode active material layer is applied to a surface of the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. A material of the negative electrode current collector may be copper, and the negative electrode active material may be carbon, silicon, or the like. To ensure that a large current passes through without fusing, a plurality of positive electrode tabs are stacked, and a plurality of negative electrode tabs are stacked.

A material of the separator may be PP (polypropylene, polypropylene), PE (polyethylene, polyethylene), or the like. In addition, the electrode assembly may be of a winding structure or a stacking structure, and the embodiments of this application are not limited thereto.

In recent years, new energy vehicles have rapidly developed. In the field of electric vehicles, traction batteries, as a power source of electric vehicles, are of irreplaceable importance. A battery is formed by a box and a plurality of battery cells accommodated in the box. An energy density of a battery affects a power capacity of the battery, and further affects electric endurance of a new energy vehicle. Therefore, how to increase an energy density of a battery in a vehicle has become one of the urgent problems to be solved for new energy vehicles.

In a general vehicle body structure, a battery generally includes a box and a plurality of battery cells accommodated in the box. The box is provided on the vehicle body, and a cold plate is provided in the box for exchanging heat with the battery cells. However, since the structure of the battery is relatively complex, a weight of the box is relatively large, and the cold plate provided in the box occupies a specific space, affecting the space occupation of the battery cells inside the box. This results in a relatively low space utilization inside the box, thereby resulting in a lower energy density of the battery, affecting the electric endurance of the vehicle, and hindering improvement of the electric endurance of the vehicle.

Based on the above considerations, to resolve the problem that the energy density of the battery in the vehicle body is relatively low, affecting the electric endurance of the vehicle, this application provides a vehicle body, including: a battery accommodating portion, a battery cell, a vehicle body floor, and a heat exchange member. The battery accommodating portion is provided with an accommodating space, and the accommodating space is provided with a first opening. The battery cell is provided in the accommodating space. The vehicle body floor covers the battery accommodating portion and closes the first opening, and the vehicle body floor is provided with a recess. The heat exchange member is provided in the recess and configured to exchange heat with the battery cell.

In the vehicle body of this structure, the vehicle body floor integrates a function for a cover plate of the battery accommodating portion, thereby reducing the number of parts, lowering manufacturing costs, and reducing the weight of the vehicle body. By providing the vehicle body floor with the recess for accommodating the heat exchange member, the space occupation of the heat exchange member in the accommodating space is reduced, which helps increase space occupation of the battery cell in the accommodating space and increase the energy density of the battery in the vehicle body. Moreover, since the vehicle body has a relatively small weight, the electric endurance of the vehicle is increased.

The vehicle body disclosed in the embodiments of this application may be used in, but is not limited to, electric apparatuses such as vehicle, ship, or aircraft.

For convenience of description, the following embodiments are described by taking a vehicle 1000 according to an embodiment of this application as an example.

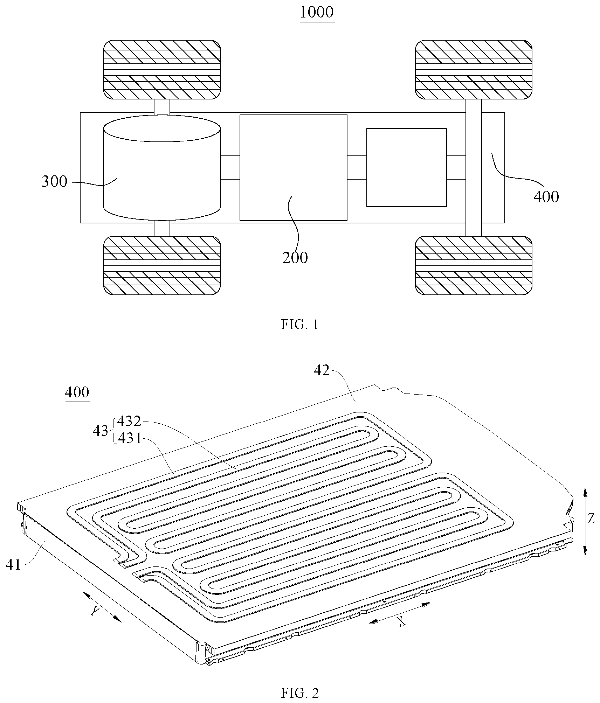

Refer to FIG. 1. FIG. 1 is a schematic structural diagram of a vehicle 1000 provided in some embodiments of this application. The vehicle 1000 may be a fuel-powered vehicle, a gas vehicle, or a new energy vehicle. The new energy vehicle may be a pure electric vehicle, a hybrid vehicle, an extended-range vehicle, or the like. The vehicle 1000 includes a vehicle body 400, and a battery cell 20 is provided in the vehicle body 400. The battery cell 20 may be used for power supply of the vehicle 1000. For example, the battery cell 20 may serve as an operating power source of the vehicle 1000. The vehicle 1000 may further include a controller 200 and a motor 300. The controller 200 is configured to control the battery cell 20 to supply power to the motor 300, for example, satisfying the operation power requirements during startup, navigation, and driving of the vehicle 1000.

In some embodiments of this application, the battery cell 20 may serve not only as the operating power source of the vehicle 1000, but also as a driving power source of the vehicle 1000, replacing or partially replacing fuel or natural gas to provide driving power for the vehicle 1000.

In the vehicle body 400, a plurality of battery cells 20 may be provided, and the plurality of battery cells 20 may be connected in series, in parallel, or in series-parallel. The series-parallel connection refers to a mixture of series and parallel connections among the plurality of battery cells 20. The plurality of battery cells 20 may be directly connected in series, in parallel, or in series-parallel, and then an entirety formed by the plurality of battery cells 20 is accommodated in the vehicle body 400. Certainly, the plurality of battery cells 20 may alternatively be connected in series, in parallel, or in series-parallel to form a battery module first, and then a plurality of battery modules are connected in series, in parallel, or in series-parallel to form an entirety accommodated in the vehicle body 400. The vehicle body 400 may further include other structures. For example, the vehicle body 400 may further include a busbar component for realizing electrical connection among the plurality of battery cells 20.

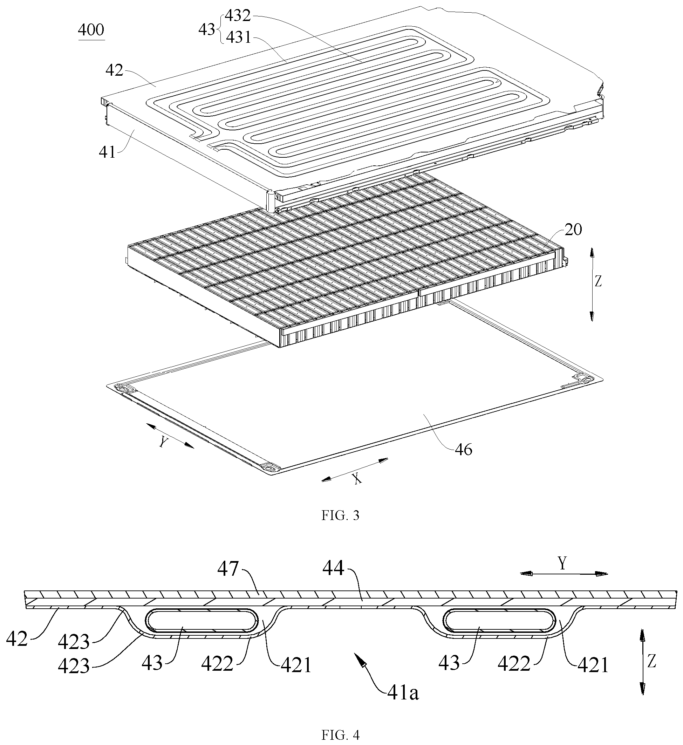

Refer to FIG. 3. FIG. 3 is a schematic partial structural diagram of a vehicle body 400 provided in some embodiments of this application. The vehicle body 400 includes a plurality of rows of battery cells 20, the plurality of rows of battery cells 20 are arranged along a first direction X of the vehicle body 400, and each row of battery cells 20 includes a plurality of battery cells 20 arranged along a second direction Y. The first direction X and the second direction Y are a length direction and a width direction of the vehicle body 400, respectively, and the first direction X and the second direction Y are perpendicular to each other.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat, cuboid, or in other shapes. For example, in FIG. 3, the battery cell 20 is cuboid.

In a first aspect, according to some embodiments of this application, with reference to FIG. 2, FIG. 3, and FIG. 4, an embodiment of this application provides a vehicle body 400, including: a battery accommodating portion 41, a battery cell 20, a vehicle body floor 42, and a heat exchange member 43. The battery accommodating portion 41 is provided with an accommodating space 41a, and the accommodating space 41a is provided with a first opening. The battery cell 20 is provided in the accommodating space 41a. The vehicle body floor 42 covers the battery accommodating portion 41 and closes the first opening. The battery accommodating portion 41 is provided with a recess 421. The heat exchange member 43 is provided in the recess 421 and configured to exchange heat with the battery cell 20.

The battery accommodating portion 41 may refer to a structure or component configured to accommodate the battery cell 20. The battery accommodating portion 41 may be a separate box component, an accommodating space 41a is formed inside the box component, and the box component may be fastened to the vehicle body floor 42. The battery accommodating portion 41 may alternatively be a partial structure of the vehicle body 400. For example, the vehicle body 400 may include a main part, and the main part may refer to a main frame structure of the vehicle body 400. The battery accommodating portion 41 may be a partial structure of the main part. For example, the main part may include a cross beam and a longitudinal beam, where the cross beam and longitudinal beam form the battery accommodating portion 41, a rectangular space may be formed between the cross beam and longitudinal beam, and the rectangular space may be the accommodating space 41a.

At least one battery cell 20 may be included in the accommodating space 41a. Refer to FIG. 3. When a plurality of battery cells 20 are provided, the plurality of battery cells 20 may be arranged in one row or a plurality of rows, and each row may include at least one battery cell.

The vehicle body floor 42 may refer to a bottom component of the vehicle body 400, and serves as a floor of a passenger cabin and a cockpit of the vehicle 1000. The vehicle body floor 42 may be, but is not limited to, a metal plate member configured to cover the battery accommodating portion 41. In the embodiments of this application, the vehicle body floor 42 covers the first opening of the accommodating space 41a to close the accommodating space 41a.

The recess 421 may refer to a concave region formed on a surface of the vehicle body floor 42. The recess 421 may be provided on a surface, of the vehicle body floor 42, on an inner side of the accommodating space 41a, or on a surface, of the vehicle body floor 42, on an outer side of the accommodating space 41a.

The heat exchange member 43 may refer to a component or an apparatus used to transfer heat in a heat exchange process, and may exchange heat with the battery cell 20 to adjust a temperature of the battery cell 20. The heat exchange member 43 may be, but is not limited to, a heat exchanger, a heat sink, a cooling tube, and the like. For example, the heat exchange member 43 may be a liquid cooling tube. The heat exchange member 43 may be provided in the recess 421, thereby integrating the heat exchange member 43 on the vehicle body floor 42.

It can be understood that, in the vehicle body 400 in the embodiments of this application, the battery accommodating portion 41 is provided with the accommodating space 41a, and the vehicle body floor 42 covers the first opening of the accommodating space 41a, so that the vehicle body floor 42 integrates the function of a cover plate for the battery accommodating portion 41. In this way, a cover plate component is not required, which reduces the number of parts, lowers costs, and helps reduce the weight of the vehicle body 400. This improves electric endurance of the vehicle 1000.

The recess 421 is provided on the vehicle body floor 42 and the heat exchange member 43 is provided in the recess 421. In this way, regardless of whether the recess 421 is provided on the surface, of the vehicle body floor 42, on the outer side of the accommodating space 41a or the surface on the inner side of the accommodating space 41a, the recess 421 accommodates at least part of the heat exchange member 43 (the heat exchange member 43 may be partially located in the recess 421 or entirely located in the recess 421), thereby reducing the space occupation of the heat exchange member 43 in the accommodating space 41a. More space in the accommodating space 41a may be used to arrange the battery cell 20, increasing the space occupation of the battery cell 20 in the accommodating space 41a. Under a condition that a volume and weight of the vehicle body 400 remain unchanged, the vehicle body 400 has a higher battery energy density, which also helps improve the electric endurance of the vehicle 1000 equipped with the vehicle body 400.

In the above technical solution, the vehicle body floor 42 may integrate a function of a cover plate for the battery accommodating portion 41, thereby reducing the number of parts, lowering manufacturing costs, and reducing a weight of the vehicle body 400. The recess 421 for accommodating the heat exchange member 43 is provided on the vehicle body floor 42, to reduce the space occupation of the heat exchange member 43 in the accommodating space 41a and help increase space occupation of the battery cell 20 in the accommodating space 41a. This increases an energy density of the battery in the vehicle body 400.

In some embodiments of this application, with reference to FIG. 4, the recess 421 is located on the outer side of the accommodating space 41a.

In this embodiment, the recess 421 is located on the outer side of the accommodating space 41a, and then the heat exchange member 43 is arranged on the outer side of the accommodating space 41a. In this way, the heat exchange member 43 does not occupy space inside the accommodating space 41a, which helps further increase the space occupation of the battery cell 20 in the accommodating space 41a and further increase a volumetric energy density of the vehicle body 400.

In addition, the heat exchange member 43 is mounted in the recess 421 and provided on the outer side of the accommodating space 41a, which may alleviate the impact on the battery cell 20 when the heat exchange member 43 fails. For example, when the heat exchange member 43 is damaged, the above solution reduces the probability of damage to the battery cell 20 caused by the damage of the heat exchange member 43. Specifically, when the heat exchange member 43 is a component that implements heat exchange through medium circulation (for example, a liquid-cooled plate), the above solution reduces the probability of short circuit or immersion of the battery cell 20 when medium leakage occurs in the heat exchange member 43. When the heat exchange member 43 breaks, the vehicle body floor 42 serves as a barrier between the heat exchange member 43 and the battery cell 20, reducing the probability of damage to the battery cell 20.

Furthermore, since the recess 421 is provided on the outer side of the accommodating space 41a, when the heat exchange member 43 needs maintenance, there is no need to detach the battery accommodating portion 41. The heat exchange member 43 may be detached from an upper side of the vehicle body floor 42 simply by lifting other components such as a carpet from the passenger cabin and cockpit of the vehicle 1000. This facilitates maintenance and replacement of the heat exchange member 43.

In the above technical solution, providing the recess 421 on the outer side of the accommodating space 41a saves space inside the accommodating space 41a, which helps further increase the space occupation of the battery cell 20 in the accommodating space 41a, thereby further increasing the energy density of the battery in the vehicle body 400. Moreover, in the above solution, the heat exchange member 43 is separated from the battery cell 20, reducing the probability that the battery cell 20 is affected by failure or damage of the heat exchange member 43, improving reliability of the battery cell 20 inside the accommodating space 41a. In addition, the recess 421 is located on the outer side of the accommodating space 41a, which facilitates disassembly of the heat exchange member 43 and reduces maintenance costs of the heat exchange member 43.

In some embodiments of this application, with reference to FIG. 4, a thickness dimension of the heat exchange member 43 is less than or equal to a recess depth dimension of the recess 421.

For example, the "thickness dimension of the heat exchange member 43" and the "recess depth dimension of the recess 421" may refer to dimensions in a third direction Z in FIG. 4. In this embodiment, the thickness dimension of the heat exchange member 43 may be less than the recess depth dimension of the recess 421, or the thickness dimension of the heat exchange member 43 is equal to the recess depth dimension of the recess 421, so that the heat exchange member 43 may be entirely located in the recess 421. In this way, a surface of the heat exchange member 43 away from the accommodating space 41a does not exceed the recess 421.

In the above technical solution, since the recess 421 is located on the outer side of the accommodating space 41a, with the thickness dimension of the heat exchange member 43 less than or equal to the recess depth dimension of the recess 421, the surface of the vehicle body floor 42 is more likely to remain flat, facilitating the arrangement of other components on the vehicle body floor 42, facilitating the arrangement of a cockpit and passenger cabin of the vehicle 1000. Moreover, in this solution, the mounting depth of the heat exchange member 43 in the recess 421 is relatively large, which reduces the probability that the heat exchange member 43 detaches from the recess 421 and improves mounting reliability of the heat exchange member 43 on the vehicle body floor 42.

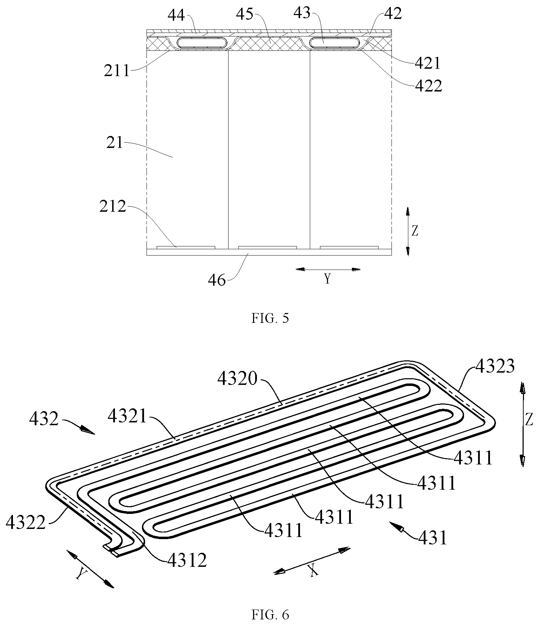

In some embodiments of this application, with reference to FIG. 4 and FIG. 5, the vehicle body 400 further includes a heat insulation member 44, and the heat insulation member 44 covers the vehicle body floor 42, where an orthographic projection of the recess 421 on the vehicle body floor 42 is located within an orthographic projection of the heat insulation member 44 on the vehicle body floor 42.

The heat insulation member 44 may refer to a component configured to reduce heat transfer or heat conduction, thereby preventing heat from spreading from a heat source to other parts. The heat insulation member 44 may include, but is not limited to, a foam heat insulation material (including but not limited to polyurethane foam, polystyrene foam, polyethylene foam, and the like), a fiber heat insulation material (including but not limited to glass wool, rock wool, asbestos, and the like), a metal heat insulation material, rubber, a plastic material, and the like. The heat insulation member 44 may include, but is not limited to, a relatively thick heat insulation pad, a relatively thin heat insulation film, and the like. For example, with reference to FIG. 4, the heat insulation member 44 may be a heat insulation pad.

"An orthographic projection of the recess 421 on the vehicle body floor 42 is located within an orthographic projection of the heat insulation member 44 on the vehicle body floor 42" may be understood as that the heat insulation member 44 covers a region where the recess 421 is located, that is, may cover the heat exchange member 43.

In the above technical solution, the heat insulation member 44 reduces a heat loss of the heat exchange member 43, thereby facilitating more efficient heat exchange between the heat exchange member 43 and the battery cells 20, improving the heat exchange efficiency between the heat exchange member 43 and the battery cell 20, reducing the probability of thermal runaway of the battery cell 20, and improving the reliability of the battery cell 20.

In some embodiments of this application, with reference to FIG. 4 and FIG. 5, the vehicle body floor 42 is provided with a protruding portion 422 protruding toward the inner side of the accommodating space 41a, and the recess 421 is formed on a surface of the protruding portion 422 located on the outer side of the accommodating space 41a.

The protruding portion 422 may refer to a portion protruding outward from the surface of the vehicle body floor 42. The protruding portion 422 may be a portion with a relatively large thickness on the vehicle body floor 42, or may be a protruding structure formed by bending the vehicle body floor 42.

In the above technical solution, the protruding portion 422 is provided on the vehicle body floor 42, and the recess 421 is provided on the protruding portion 422. In this case, the protruding portion 422 provides a relatively large space for arrangement of the recess 421, which enables the recess 421 to have an appropriate recess depth for mounting of the heat exchange member 43 and improves the mounting reliability of the heat exchange member 43 on the vehicle body floor 42. Moreover, while the mounting reliability of the heat exchange member 43 on the vehicle body floor 42 is improved, this helps reduce the thickness dimension of the vehicle body floor 42, reducing material consumption of the vehicle body floor 42, lowering costs, and helping reduce the weight of the vehicle body 400.

In some embodiments of this application, the vehicle body floor 42 is stamped to form the protruding portion 422.

In the above technical solution, the protruding portion 422 may be understood as a concave rib formed by stamping the vehicle body floor 42 downward, and a concave region of the concave rib forms the recess 421. In this way, the protruding portion 422 not only provides an arrangement position of the recess 421, but also improves a strength and stiffness of the vehicle body floor 42, providing stronger protection above the battery cell 20, and reducing the probability that the battery cell 20 is damaged due to a collision from above.

In some embodiments of this application, with reference to FIG. 4, a transition fillet 423 is provided at a bottom of the recess 421 and at a position where the recess 421 and the vehicle body floor 42 join each other. In the above technical solution, the transition fillet 423 is provided at the bottom of the recess 421 and at the position where the recess 421 and the vehicle body floor 42 join each other, to help reduce the probability of stress concentration and improve the reliability of the vehicle body floor 42.

In some embodiments of this application, with reference to FIG. 5, the battery cell 20 includes a housing 21, the housing 21 is provided with a plurality of housing walls, one of the plurality of housing walls is a first housing wall 211, the first housing wall 211 abuts against the protruding portion 422, and a filling member 45 is provided between the first housing wall 211 and the vehicle body floor 42.

The housing wall may refer to a wall portion in the housing 21 used to form an internal space. Based on different shapes and structures of the housing 21, quantities of housing walls of the housing 21 may be different. For example, when the housing 21 is a cylindrical housing, the housing 21 may include an upper housing wall, a lower housing wall, and a cylindrical peripheral housing wall. When the housing 21 is a cuboid, the housing 21 may include an upper housing wall, a lower housing wall, a left housing wall, a right housing wall, a front housing wall, and a rear housing wall. The first housing wall 211 may refer to a housing wall among the plurality of housing walls of the housing 21 that is in close contact with the protruding portion 422.

The filling member 45 refers to a material or component filled in a space between the first housing wall 211 and the vehicle body floor 42. The filling member 45 may include, but is not limited to, a foaming material, a bonding glue, a thermally conductive material, and the like.

In the above technical solution, the housing 21 abuts against the protruding portion 422 through the first housing wall 211. In this case, the housing 21 is relatively close to the heat exchange member 43, and the heat exchange member 43 quickly exchanges heat with the battery cell 20 through the first housing wall 211, helping improve the heat exchange efficiency of the battery cell 20. The filling member 45 provides support between the first housing wall 211 and the vehicle body floor 42, better supporting the vehicle body floor 42. This helps reduce the probability of deformation or damage of the vehicle body floor 42, reduce a probability of displacement of the battery cell 20 in the accommodating space 41a, and improve the stability of the battery cell 20 in the accommodating space 41a, thereby helping improve the operation reliability of the battery cell 20.

In some embodiments of this application, the filling member 45 includes at least one of a thermally conductive portion and a bonding portion.

The thermally conductive portion may refer to a material or component that may be configured for thermal conduction between the first housing wall 211 and the vehicle body floor 42. The thermally conductive portion may include, but is not limited to, thermally conductive silicone grease, a thermally conductive metal part, and the like.

The bonding portion may refer to a material or component that may be configured to bond the first housing wall 211 and the vehicle body floor 42. The bonding portion may include, but is not limited to, a structural adhesive, a double-sided tape, and the like.

It is understood that the filling member 45 may include a thermally conductive portion. Alternatively, the filling member 45 may include a bonding portion. Alternatively, the filling member 45 may include both a thermally conductive portion and a bonding portion. In this embodiment, the thermally conductive portion and the bonding portion may be arranged in a staggered manner. For example, the thermally conductive portion and the bonding portion may be strip-shaped components, and may be arranged in a staggered manner along the second direction Y in FIG. 5.

In the above technical solution, since the filling member 45 includes at least one of the thermally conductive portion and the bonding portion, the filling member 45 not only provides support between the first housing wall 211 and the vehicle body floor 42, but also further implements a function of thermal conduction and/or bonding. When the filling member 45 includes the thermally conductive portion, efficiency of heat exchange between the heat exchange member 43 and the battery cell 20 is further improved. When the filling member 45 includes the bonding portion, the stability of the battery cell 20 in the accommodating space 41a is improved, and a mounting region for the battery cell 20 and the battery accommodating portion 41 has higher strength and stiffness, which improves the reliability of the vehicle body 400.

In some embodiments of this application, with reference to FIG. 5, the housing 21 is provided with a pressure relief portion 212, and the pressure relief portion 212 is provided on a housing wall other than the first housing wall 211.

The pressure relief portion 212 may refer to a safety structure or apparatus configured to discharge gas and relieve pressure when a pressure inside the battery cell 20 exceeds a specific value. The pressure relief portion 212 may include, but is not limited to, a pressure relief valve, a pressure relief sheet, a pressure relief film, and the like. The pressure relief valve may refer to a valve component that may automatically open under a specific pressure. The pressure relief sheet may refer to a metal sheet that may automatically rupture under a specific pressure. The pressure relief film may refer to a thin film that may expand and rupture under a specific pressure.

In the solution in these embodiments, the first housing wall 211 may refer to a top wall of the housing 21, and the pressure relief portion 212 may be provided on a bottom housing wall or one of the plurality of peripheral housing walls of the housing 21. For example, battery cells 20 may be arranged in a plurality of rows along the first direction X of the battery accommodating portion 41, and each row of the battery cell 20 may include a plurality of battery cells 20 arranged along the second direction Y of the battery accommodating portion 41. In this case, the pressure relief portion 212 may be provided on the bottom housing wall of the housing 21. When battery cells 20 are arranged in a single row along the first direction X of the battery accommodating portion 41, and the battery cells 20 are blade-shaped, the pressure relief portion 212 may be provided on the housing wall of the housing 21 located at one end in the second direction Y.

In the above technical solution, the pressure relief portion 212 is provided on the housing wall other than the first housing wall 211, preventing gas discharge of the pressure relief portion 212 towards the vehicle body floor 42 and the heat exchange member 43, reducing the impact on the vehicle body floor 42 caused when the pressure relief portion 212 discharges gas and relieves pressure during thermal runaway of the battery cell 20, thereby reducing the probability that the cockpit and passenger cabin of the vehicle 1000 are affected by high temperature during thermal runaway, helping improve safety of a driver and passenger. Moreover, in this solution, the impact of the gas discharge and pressure relief of the pressure relief portion 212 on the heat exchange member 43 is reduced, reducing the probability of damage to the heat exchange member 43 caused by damage from thermal runaway of the battery cell 20, helping prolong a service life of the heat exchange member 43.

In some embodiments of this application, with reference to FIG. 5, the pressure relief portion 212 is provided on the housing wall located at the bottom of the housing 21. In this technical solution, the pressure relief portion 212 is positioned at a greater distance from the vehicle body floor 42 and the heat exchange member 43, thereby further reducing the impact on the vehicle body floor 42 and the heat exchange member 43 when the pressure relief portion 212 discharges gas and relieves pressure, thus further improving the safety of the driver and passenger, further reducing the probability of damage to the heat exchange member 43 when thermal runaway occurs in the battery cell 20.

In some embodiments of this application, the heat exchange member 43 and the recess 421 are connected to each other through bonding. In this embodiment, the bonding method of the heat exchange member 43 and the recess 421 includes, but is not limited to, the use of a structural adhesive, double-sided tape, and the like.

In the above technical solution, the heat exchange member 43 and the recess 421 are connected to each other through bonding. In this way, the probability that the heat exchange member 43 detaches from the recess 421 is reduced, and mounting of the heat exchange member 43 in the recess 421 is strengthened, thereby improving reliability of heat exchange between the heat exchange member 43 and the battery cell 20, and helping improve the operation reliability of the battery cell 20.

In some embodiments of this application, with reference to FIG. 4 and FIG. 5, the heat exchange member 43 is a heat exchange tube, and the heat exchange tube is configured as a flat tube.

The heat exchange tube may refer to a tubular component, and the heat exchange tube may exchange heat with the battery cell 20 through a medium flowing inside, thereby adjusting the temperature of the battery cell 20. The medium flowing in the heat exchange tube may include, but is not limited to, liquid media (such as water and coolant), gaseous media, and the like. The flat tube may refer to a tube whose width is far greater than its thickness. For example, the width of the flat tube may be a dimension in the second direction Y in FIG. 4 and FIG. 5, and the thickness of the flat tube may be the dimension in the third direction Z in FIG. 4 and FIG. 5. For example, a cross-section of the flat tube may be rectangular or racetrack-shaped.

In the above technical solution, the heat exchange member 43 is configured as a heat exchange tube, and therefore the heat exchange tube has a simple structure, which lowers costs. The heat exchange tube is configured as a flat tube, and in this case, the flat tube has a relatively small thickness dimension and a relatively large flow capacity, achieving a better heat exchange effect; in addition, it has a relatively small dimension in a thickness direction of the vehicle body floor 42, which achieves a more compact overall structure of the vehicle body floor 42 and the heat exchange member 43, saving space.

In some embodiments of this application, with reference to FIG. 2, FIG. 3, and FIG. 7, the heat exchange member 43 includes a first heat exchange section 431 and a second heat exchange section 432; the second heat exchange section 432 is bent to form a U-shaped region 4320; the first heat exchange section 431 is bent and provided in the U-shaped region 4320, and is bent and connected to the second heat exchange section 432; and the recess 421 includes a first recess and a second recess; the second recess and the second heat exchange section 432 are in a same shape; the second heat exchange section 432 is provided in the second recess; the first recess and the first heat exchange section 431 are in a same shape; and the first heat exchange section 431 is provided in the first recess.

A plurality of battery cells 20 may be provided in the accommodating space 41a, and the first heat exchange section 431 and the second heat exchange section 432 may be configured to exchange heat with the plurality of battery cells 20. "The second heat exchange section 432 is bent to form a U-shaped region 4320 (shown by a dashed line in FIG. 7)" and "the first heat exchange section 431 is bent and provided in the U-shaped region 4320" are intended to indicate that the second heat exchange section 432 is provided outside the first heat exchange section 431 along a circumferential direction, and may be arranged on three sides along the circumference direction of the first heat exchange section 431, and the second heat exchange section 432 may be arranged closer to a periphery of a cell group formed by the plurality of battery cells 20 than the first heat exchange section 431.

The first heat exchange section 431 and the second heat exchange section 432 are bent and connected, in other words, one end of the first heat exchange section 431 is connected to one end of the second heat exchange section 432, and a connection position for the first heat exchange section 431 and the second heat exchange section 432 is a bent non-linear structure. For example, the connection position for the first heat exchange section 431 and the second heat exchange section 432 may be bent into an arc segment.

The first heat exchange section 431 and the second heat exchange section 432 are connected. In this way, one of an end of the first heat exchange section 431 away from the second heat exchange section 432 and an end of the second heat exchange section 432 away from the first heat exchange section 431 may serve as an inlet end, and the other may serve as an outlet end. Thus, when the heat exchange member 43 exchanges heat, the medium may flow from the first heat exchange section 431 to the second heat exchange section 432, or from the second heat exchange section 432 to the first heat exchange section 431.

It is understood that during the flow of the heat exchange medium in the heat exchange member 43, a temperature of the heat exchange medium varies, resulting in a gradual decrease in a heat exchange effect. For example, when the heat exchange member 43 cools and dissipates heat for the cell group, heat of the battery cells 20 is gradually transferred to the heat exchange medium, so that the temperature of the heat exchange medium gradually rises during the flow along the heat exchange member 43, the temperature difference with the battery cells 20 gradually decreases, and the heat exchange efficiency gradually decreases. When the heat exchange member 43 heats and warms up the cell group, heat in the heat exchange medium is gradually transferred to the battery cells 20, so that the temperature of the heat exchange medium gradually decreases during the flow along the heat exchange member 43, the temperature difference with the battery cells 20 gradually decreases, and the heat exchange efficiency gradually decreases.

In these embodiments, when the heat exchange member 43 cools and dissipates heat for the cell group, the heat exchange fluid may flow from the first heat exchange section 431 to the second heat exchange section 432, or the heat exchange medium may flow from the second heat exchange section 432 to the first heat exchange section 431. When the heat exchange medium also flows from the first heat exchange section 431 to the second heat exchange section 432, the battery cells 20 in the middle of the cell group (that is, internal battery cells 20 on an inner side of the periphery) may be cooled first, and then the battery cells 20 at a periphery of the cell group are cooled. Since the heat dissipation of the battery cells 20 at the periphery of the cell group is better than that of the internal battery cells 20, the heat exchange fluid with a lower temperature in the first heat exchange section 431 may better satisfy the heat dissipation requirement of the battery cells 20 in the middle of the cell group. In addition, since the battery cells 20 at the periphery may naturally dissipate heat directly to an external environment, when a temperature of the heat exchange fluid in the second heat exchange section 432 is slightly higher, the heat dissipation requirement of the peripheral battery cells 20 is satisfied. In this way, the cooling effect obtained by the battery cells 20 at the periphery of the cell group and the battery cells 20 in the middle of the cell group are substantially consistent, and therefore the temperatures of the battery cells 20 at the periphery of the cell group and the battery cells 20 in the middle of the cell group after cooling and heat dissipation are relatively consistent, achieving a more uniform temperature distribution in the cell group.

"The second recess and the second heat exchange section 432 are in a same shape; the second heat exchange section 432 is provided in the second recess; the first recess and the first heat exchange section 431 are in a same shape; and the first heat exchange section 431 is provided in the first recess" is intended to indicate that the second recess may form a U-shaped recess with the same shape as the second heat exchange section, thereby allowing the second heat exchange section 432 to be placed, and the first recess is in the same shape as the first heat exchange section 431, thereby allowing the first heat exchange section 431 to be placed.

In the above technical solution, when the heat exchange member 43 exchanges heat with the cell group formed by the plurality of battery cells 20, the U-shaped region 4320 formed by the peripheral second heat exchange section 432 is opposite the peripheral battery cells 20 of the cell group, and the first heat exchange section 431 in the U-shaped region 4320 is opposite the internal battery cells 20. In this way, the heat exchange member 43 compensates for a temperature difference between inner and outer cells caused by heat exchange between the peripheral battery cells 20 and the environment, so that the heat exchange effect of the peripheral battery cells 20 of the cell group and the internal battery cells 20 of the cell group is substantially consistent, improving temperature uniformity of the cell group, thereby prolonging a service life of the cell group to a certain extent.

Optionally, the second heat exchange section 432 includes a first portion 4321, a second portion 4322, and a third portion 4323. The first portion 4321 extends along the first direction X of the vehicle body floor 42, and the second portion 4322 and the third portion 4323 are located at two ends of the first portion 4321 in the first direction X and communicate with the first portion 4321. The second portion 4322 and the third portion 4323 extend along the second direction Y of the vehicle body floor 42. The first heat exchange section 431 includes a fourth portion 4311 and a fifth portion 4312. A plurality of fourth portions 4311 extend along the first direction X and are spaced apart along the second direction Y. The plurality of fourth portions 4311 communicate with each other in sequence, and one of the plurality of fourth portions 4311 away from the first portion 4321 communicates with the second portion 4322. The fifth portion 4312 communicates with another of the plurality of fourth portions 4311 close to the first portion 4321, and extends along the second direction Y.

In the above technical solution, the first heat exchange section 431 and the second heat exchange section 432 may form a serpentine structure, which has a relatively large heat exchange area and heat exchange range, helping improve the efficiency of heat exchange with the cell group formed by the plurality of battery cells 20.

Optionally, the first portion 4321, the second portion 4322, and the third portion 4323, the fourth portion 4311, and the fifth portion 4312 are heat exchange tubes. The first heat exchange section 431 and the second heat exchange section 432 in this solution have relatively simple structures, which lowers costs.

In some embodiments of this application, with reference to FIG. 3, the accommodating space 41a is provided with a second opening, and the vehicle body 400 further includes a lower cover plate 46. The lower cover plate 46 covers the battery accommodating portion 41 and closes the second opening.

The lower cover plate 46 may refer to a plate member configured to close the second opening. The lower cover plate 46 may include, but is not limited to, a metal plate member, plastic plate member, and composite material plate member. For example, the lower cover plate 46 may be an aluminum alloy plate.

In the above technical solution, since the first opening is provided at the top of the accommodating space 41a, with the second opening further provided at the bottom of the accommodating space 41a, it is more convenient to mount the battery cell 20 into the battery accommodating portion 41. Moreover, since the vehicle body floor 42 is mounted at the top of the battery accommodating portion 41, after the assembly of the entire vehicle, disassembly of the vehicle body floor 42 is relatively difficult. Therefore, during subsequent maintenance, the battery cell 20 may be repaired or replaced by detaching the lower cover plate 46, which further reduces maintenance costs.

In some embodiments of this application, with reference to FIG. 4, the vehicle body 400 further includes a laying member 47, and the laying member 47 is laid on the vehicle body floor 42.

The laying member 47 may refer to a material or component covering the vehicle body floor 42. Optionally, the laying member 47 may be a flexible component. Specifically, the flexible component may include, but is not limited to, a carpet and the like.

In the above technical solution, the laying member 47 covers the vehicle body floor 42 to provide protection, reducing the probability of damage to the top of the vehicle body floor 42 caused by collision or impact. Moreover, since the vehicle body floor 42 is generally a metal part with relatively high strength and stiffness, the laying member 47 effectively prevents the driver and passenger from directly contacting the vehicle body floor 42, thereby improving a riding experience of the driver and passenger.

According to the vehicle body 400 in the embodiments of this application, the vehicle body 400 includes: a battery accommodating portion 41, a vehicle body floor 42, a cooling tube, a lower cover plate 46, a heat insulation pad, and a battery cell 20.

The battery accommodating portion 41 is provided with an accommodating space 41a, and the accommodating space 41a is provided with a first opening at a top and a second opening at a bottom.

The vehicle body floor 42 is provided at the top of the battery accommodating portion 41 and closes the first opening, and the top of the vehicle body floor 42 is provided with a recess 421. The cooling tube is configured as a "serpentine cooling tube", and the recess 421 is configured as a "serpentine recess", so that the cooling tube is adaptively arranged in the recess 421. The cooling tube is fastened in the recess 421 by an adhesive, and a top of the cooling tube does not exceed the recess 421. The heat insulation pad covers the vehicle body floor 42 and is located on an upper side of the heat exchange member 43. The heat insulation pad reduces a heat loss of the cooling tube.

The lower cover plate 46 is provided at the bottom of the battery accommodating portion 41 and closes the second opening. Thus, the lower cover plate 46, the vehicle body floor 42, and the accommodating space 41a jointly form a housing space for accommodating the battery cell 20.

The battery cell 20 is provided in the accommodating space 41a and is placed upside down, and a plurality of rows of battery cells 20 may be provided, where each row includes a plurality of battery cells 20.

It is understood that the vehicle body 400 in the embodiments of this application has a relatively high performance and low cost, and space utilization of the accommodating space 41a in the vehicle body 400 for placing the battery cells 20 is also improved, which helps increase a battery energy density.

According to a second aspect, an embodiment of this application further provides a vehicle 1000, including the vehicle body 400 described above.

In the above technical solution, since the battery cell 20 in the vehicle body 400 is provided in the accommodating space 41a of the battery accommodating portion 41, the vehicle body 400 has a relatively high battery energy density, thereby improving electric endurance of the vehicle 1000. Moreover, the vehicle body 400 has a relatively small number of parts and small weight, which helps lower manufacturing costs of the vehicle 1000 and further improve the electric endurance of the entire vehicle.

It should be noted that the embodiments of this application and the features in the embodiments may be combined with one another in the absence of conflict.

The above are only preferred embodiments of this application and are not intended to limit this application. For those skilled in the art, this application may have various modifications and changes. Any modification, equivalent replacement, improvement, and the like made within the spirit and principle of this application shall fall within the protection scope of this application.

## Claims

1. A vehicle body, comprising:
a battery accommodating portion, wherein the battery accommodating portion is provided with an accommodating space, and the accommodating space is provided with a first opening;
a battery cell, wherein the battery cell is provided in the accommodating space;
a vehicle body floor, wherein the vehicle body floor covers the battery accommodating portion and closes the first opening, and the vehicle body floor is provided with a recess; and
a heat exchange member, wherein the heat exchange member is provided in the recess and configured to exchange heat with the battery cell.

2. The vehicle body according to claim 1, wherein the recess is located on an outer side of the accommodating space.

3. The vehicle body according to claim 2, wherein a thickness dimension of the heat exchange member is less than or equal to a recess depth dimension of the recess.

4. The vehicle body according to claim 3, wherein the vehicle body further comprises:
a heat insulation member, wherein the heat insulation member covers the vehicle body floor, and an orthographic projection of the recess on the vehicle body floor is located within an orthographic projection of the heat insulation member on the vehicle body floor.

5. The vehicle body according to any one of claims 2 to 4, wherein the vehicle body floor is provided with a protruding portion protruding toward an inner side of the accommodating space, and the recess is formed on a surface of a contour surface of the protruding portion located on the outer side of the accommodating space.

6. The vehicle body according to claim 5, wherein the vehicle body floor is stamped to form the protruding portion.

7. The vehicle body according to claim 5, wherein the battery cell comprises:
a housing, wherein the housing is provided with a plurality of housing walls, one of the plurality of housing walls is a first housing wall, the first housing wall abuts against the protruding portion, and a filling member is provided between the first housing wall and the vehicle body floor.

8. The vehicle body according to claim 7, wherein the filling member comprises at least one of a thermally conductive portion and a bonding portion.

9. The vehicle body according to claim 7 or 8, wherein the housing is provided with a pressure relief portion, and the pressure relief portion is provided on a housing wall other than the first housing wall.

10. The vehicle body according to claim 9, wherein the pressure relief portion is provided on the housing wall located at a bottom of the housing.

11. The vehicle body according to any one of claims 1 to 10, wherein the heat exchange member and the recess are connected to each other through bonding.

12. The vehicle body according to any one of claims 1 to 11, wherein the heat exchange member is a heat exchange tube, and the heat exchange tube is configured as a flat tube.

13. The vehicle body according to any one of claims 1 to 12, wherein the heat exchange member comprises a first heat exchange section and a second heat exchange section, the second heat exchange section is bent to form a U-shaped region, and the first heat exchange section is bent and provided in the U-shaped region and is bent and connected to the second heat exchange section; and
the recess comprises a first recess and a second recess, the second recess and the second heat exchange section are in a same shape, the second heat exchange section is provided in the second recess, the first recess and the first heat exchange section are in a same shape, and the first heat exchange section is provided in the first recess.

14. The vehicle body according to any one of claims 1 to 13, wherein the accommodating space is provided with a second opening, and the second opening is located at a bottom of the accommodating space relative to the first opening, the vehicle body further comprises a lower cover plate, and the lower cover plate covers the battery accommodating portion and closes the second opening.

15. A vehicle, comprising the vehicle body according to any one of claims 1 to 14.
